# EUROPÄISCHE PATENTSCHRIFT

(11) **EP 4 103 432 B1**
(45) Veröffentlichungstag und Bekanntmachung des Hinweises auf die Patenterteilung: **02.07.2025**
(21) Anmeldenummer: 21705896.5
(22) Anmeldetag: 09.02.2021
(51) Int. Cl.: B60R 22/195

(54) **STRAFFVORRICHTUNG FÜR EINE SICHERHEITSGURTKOMPONENTE**
TENSIONING APPARATUS FOR A SAFETY BELT COMPONENT
APPAREIL DE TENDEUR POUR UN COMPOSANT DE CEINTURE DE SÉCURITÉ

(30) Priorität: 14.02.2020 DE 102020103913
(43) Veröffentlichungstag der Anmeldung: 21.12.2022
(73) Patentinhaber: Autoliv Development AB, 447 83 Vårgårda (SE)
(72) Erfinder: ZORGEL, Zoltan, 500473 Brasov (RO); DAN, Stefan, 500352 Brasov (RO); BUGULET, Robert, 500053 Brasov (RO); IMRE, Paul, 430242 Baia Mare (RO)
(74) Vertreter: Feucker, Max Martin
(86) Internationale Anmeldenummer: PCT/EP2021/052991
(87) Internationale Veröffentlichungsnummer: WO 2021/160569

(56) Entgegenhaltungen:
- US-A1- 2001 035 643
- US-A1- 2003 230 872
- US-A1- 2007 278 779
- US-A1- 2011 068 614
- US-A1- 2011 221 178
- US-A1- 2014 265 288

## Beschreibung

Die vorliegende Erfindung betrifft eine Straffvorrichtung für eine Sicherheitsgurtkomponente, mit einem Gasgenerator zur Erzeugung eines Druckgases, einem von dem Druckgas antreibbaren Kolben, einem an den Kolben angeschlossenen Zugseil, welches mit der in eine Straffbewegung zu versetzenden Sicherheitsgurtkomponente verbindbar ist, und einem Strafferrohr zur Aufnahme und Führung des Kolbens.

Eine solche Straffvorrichtung ist beispielsweise aus DE 10 2015 111 083 B4 bekannt, bei der der Kolben in einem Strafferrohr geführt ist. Das Strafferrohr ist mit einem in einem Druckgussverfahren hergestellten Umlenkblock verbunden, der eine Seilumlenkung für das Zugseil ausbildet sowie eine Aufnahme für den Gasgenerator und eine Druckkammer ausbildet, in die das von den Gasgenerator erzeugte Druckgas einströmt. Mit dem stirnseitig an das Strafferrohr angeschlossen Umlenkblock ist ein relativ teuer herzustellendes Bauteil notwendig, welches zudem einen relativ hohen Raumbedarf hat.

Aufgabe der vorliegenden Erfindung ist es daher, die mit Bezug zum Stand der Technik geschilderten Probleme zumindest teilweise zu beseitigen und eine Straffvorrichtung sowie ein Verfahren zur Herstellung einer Straffvorrichtung anzugeben, mit denen die Herstellung einer Straffvorrichtung vereinfacht ist und/oder kostengünstiger ist, wobei die Straffvorrichtung einen geringeren Platzbedarf hat. Eine Straffvorrichtung mit den Merkmalen des Oberbegriffs des Anspruchs 1 ist aus US 2014/0265288 A1 bekannt.

Gelöst wird die Aufgabe durch eine Straffvorrichtung und ein Verfahren mit den Merkmalen des jeweiligen unabhängigen Anspruchs. Vorteilhafte Weiterbildungen der Straffvorrichtung und des Verfahrens sind in den abhängigen Ansprüchen und in der Beschreibung angegeben, wobei einzelne Merkmale der vorteilhaften Weiterbildungen in technisch sinnvoller Weise miteinander kombinierbar sind.

Die Aufgabe wird insbesondere gelöst durch eine Straffvorrichtung mit den eingangs genannten Merkmalen, bei dem der Gasgenerator im Strafferrohr angeordnet ist, das Strafferrohr zwischen dem Gasgenerator und dem Kolben eine Ausnehmung in seinem Mantel aufweist und eine Seilumlenkung vorgesehen ist, mit der das Zugseil durch die Ausnehmung aus dem Strafferrohr herausgeführt ist.

Die Erfindung sieht in ihrem Grundgedanken also vor, dass der Gasgenerator selbst im Strafferrohr angeordnet ist und dass die Seilumlenkung bereits im Strafferrohr selbst beginnt, sodass das Zugseil durch den Mantel des Strafferrohrs herausgeführt ist. Auf diese Weise kann auf einen aufwendig herzustellenden Umlenkblock verzichtet werden, wobei sich dadurch auch eine Raumeinsparung ergibt.

Der Gasgenerator ist also insbesondere mit seinem im Auslösefall das Druckgas emittierenden Abschnitt vollständig innerhalb des Strafferrohrs angeordnet. Insbesondere ist der Gasgenerator so angeordnet, dass lediglich seine (elektrischen) Anschlüsse von außerhalb des Strafferrohrs zugänglich sind. Der Gasgenerator ist dabei insbesondere an einem Ende des Strafferrohrs angeordnet, wobei die Anschlüsse des Gasgenerators von der Stirnseite des Strafferrohrs zugänglich sind. Es kann insbesondere vorgesehen sein, dass das Strafferrohr an dem den Gasgenerator aufnehmenden Ende eine Durchmesserverkleinerung aufweist, sodass der Gasgenerator formschlüssig gegen ein Entfernen auf dieser Seite des Strafferrohrs gesichert ist.

Im Auslösefall wird der Kolben durch das von dem Gasgenerator generierte Gas in Richtung des dem Gasgenerator gegenüberliegenden Ende des Strafferrohrs beschleunigt, wobei der Kolben das Zugseil durch die Ausnehmung hindurchzieht, wozu die Ausnehmung im Mantel des Strafferrohrs zwischen dem Gasgenerator und dem Kolben angeordnet ist.

Um im Auslösefall zu verhindern, dass das Zugseil im Bereich der Ausnehmung unmittelbar am Strafferrohr anliegt, ist mindestens ein weiteres Bauteil als Seilumlenkung vorgesehen, das das Zugseil zumindest während der Straffbewegung zu/durch die Ausnehmung im Strafferrohr führt. Die Seilumlenkung ist dabei insbesondere so ausgebildet, dass das Zugseil aus der im Wesentlichen im Strafferrohr achsparallelen Ausrichtung in eine dazu schräge (insbesondere orthogonale) Ausrichtung außerhalb des Strafferrohrs umgelenkt wird. Das Zugseil läuft also außerhalb des Strafferrohrs schräg zum Strafferrohr.

Es ist hierbei insbesondere vorgesehen, dass die Ausnehmung in dem Strafferrohr in einem geradlinig ausgebildeten Abschnitt des Strafferrohrs angeordnet ist, sodass das Zugseil außerhalb des Strafferrohrs schräg zu diesem geradlinig ausgebildeten Abschnitt verläuft. Bevorzugt ist in diesem Zusammenhang, dass das Strafferrohr über seine gesamte Erstreckung geradlinig/linear, also ohne Krümmung entlang seiner Längserstreckung, ausgebildet ist.

Die Seilumlenkung ist insbesondere zwei- oder mehrteilig ausgebildet und weist ein in das Strafferrohr eingeschobenes Führungsteil und ein von außerhalb des Strafferrohrs durch die Ausnehmung greifendes Fixierungsteil auf. Das Führungsteil ist also insbesondere in Hinsicht auf seinen Außenddurchmesser und seine Umfangsgestaltung so ausgeführt, dass es während der Montage der Straffvorrichtung von einem Ende des Strafferrohrs in das Strafferrohr eingeschoben werden kann. Das Fixierungsteil ist hingegen so ausgebildet und auf die Ausnehmung im Strafferrohr abgestimmt, dass es von außerhalb des Strafferrohrs mit einem Abschnitt in die Ausnehmung eingesetzt werden kann, wobei bevorzugt ein wesentlicher Abschnitt des Fixierungsteils außerhalb des Strafferrohrs ausgebildet ist.

In einer bevorzugten Ausführungsform ist vorgesehen, dass das Führungsteil eine Aussparung aufweist, in die das Fixierungsteil mit einem Vorsprung eingreift. Hierbei korrespondiert eine Formgestaltung zumindest eines Abschnitts des Vorsprungs mit einer komplementären Formgestalt zumindest eines Abschnitts der Aussparung, sodass das Führungsteil und das Fixierungsteil während der Montage exakt zueinander ausgerichtet werden können. Dabei ist die Aussparung in dem Führungsteil in einem Bereich des Führungsteils ausgebildet, der im montierten Zustand der Ausnehmung im Strafferrohr zugewandt ist, während der Vorsprung insbesondere so ausgebildet ist, dass er im montierten Zustand innerhalb des Strafferrohrs angeordnet ist und insbesondere einen an die Ausnehmung im Strafferrohr angrenzenden Abschnitt des Strafferrohrs hintergreift.

Das Führungsteil und das Fixierungsteil können jedes für sich oder auch gemeinsam eine Umlenkung für das Zugseil ausbilden, sodass das Zugseil insbesondere so aus dem Strafferrohr herausgeführt wird, dass es nicht in Berührung mit dem Strafferrohr kommen kann.

Während es prinzipiell ausreichend ist, dass der Gasgenerator und die Seilumlenkung einzeln in/an dem Strafferrohr montiert werden können, so ist bevorzugt, wenn insbesondere das Führungsteil der Seilumlenkung eine Aufnahme aufweist, in welcher der Gasgenerator angeordnet ist. Insbesondere ist der Gasgenerator mit seinem das Druckgas ausstoßenden Abschnitt innerhalb der Aufnahme des Führungsteils angeordnet. Somit kann erreicht werden, dass das Führungsteil nicht nur für die Umlenkung des Seils verwendet werden kann, Das Führungsteil und das Fixierungsteil können jedes für sich oder auch gemeinsam eine Umlenkung für das Zugseil ausbilden, sodass das Zugseil insbesondere so aus dem Strafferrohr herausgeführt wird, dass es nicht in Berührung mit dem Strafferrohr kommen kann.

Erfindungsgemäß weist das Führungsteil der Seilumlenkung eine Aufnahme auf, in welcher der Gasgenerator angeordnet ist. Insbesondere ist der Gasgenerator mit seinem das Druckgas ausstoßenden Abschnitt innerhalb der Aufnahme des Führungsteils angeordnet. Somit kann erreicht werden, dass das Führungsteil nicht nur für die Umlenkung des Seils verwendet werden kann, sondern dass das Führungsteil gleichzeitig eine Abdichtung für das Druckgas bereitstellt, sodass das Druckgas im Auslösefall nicht an unbeabsichtigten Stellen aus dem Strafferrohr austritt. Zudem kann somit erreicht werden, dass der Gasgenerator in dem Führungsteil vormontiert wird und dass das Führungsteil und der Gasgenerator gemeinsam in dem Strafferrohr während der Herstellung angeordnet werden.

Es kann zudem vorgesehen sein, dass das Führungsteil mindestens einen Druckgasleitkanal ausbildet, welcher sich entlang der Erstreckung des Strafferrohrs zu dem kolbenseitigen Ende des Führungsteils erstreckt. Die Druckgasleitkanäle sind insbesondere röhrenförmig (gegebenenfalls gekrümmt) in dem Führungsteil ausgebildet und erstrecken sich von einem dem Gasgenerator zugewandten Einlass zu einem Ende des Führungsteils, das dem Kolben zugewandt ist. Mit dem mindestens einen Druckgasleitkanal kann also das aus dem Gasgenerator austretende Druckgas gezielt dem Raum zwischen Führungsteil und Kolben zugeleitet werden, ohne dass das Zugseil im Bereich des Führungsteils mit dem heißen Druckgas beaufschlagt wird. im montierten Zustand geführt ist.

In einer bevorzugten Ausführungsform wird also das Zugseil zunächst durch eine Lippendichtung von dem Führungsteil umschlossen, wird anschließend gemeinsam durch den Vorsprung des Fixierungsteils und die Umlenkung am Führungsteil zu der Ausnehmung geführt und anschließend weiter durch die Öffnung des Fixierungsteils geführt.

Der außerhalb des Strafferrohrs angeordnete Abschnitt des Fixierungsteils wird mittels eines Halters an dem Strafferrohr gehalten. Der Halter ist insbesondere so geformt, dass er das Strafferrohr außen umgibt und mit seinen beiden Enden an dem Fixierungsteil befestigt ist. Die Befestigung des Halters an dem Fixierungsteil kann mittels Schrauben oder Nieten erfolgen. Auch ist es möglich, dass die Straffvorrichtung in diesem Bereich an einem Kraftfahrzeug befestigt wird. Der Halter weist in seinem Schnitt bevorzugt eine U- oder schlüssellochförmige Gestalt auf.

Zur Herstellung der Straffvorrichtung wird also zunächst ein insbesondere geradliniges Strafferrohr bereitgestellt. Anschließend wird der Gasgenerator in das Strafferrohr eingeschoben. Hierbei kann vorgesehen sein, dass der Gasgenerator zunächst in einem Element, insbesondere in dem Führungsteil der Seilumlenkung vormontiert wird, und dass das Führungsteil und der Gasgenerator gemeinsam in das Strafferrohr eingeschoben werden. Anschließend erfolgt eine Fixierung der Seilumlenkung am Strafferrohr, wozu insbesondere das Fixierungsteil von außen durch die Ausnehmung in das Führungsteil eingebracht wird. Zudem kann das Fixierungsteil mittels eines Halters in seiner Position am Strafferrohr befestigt werden.

Zudem wird das Zugseil in das Strafferrohr eingebracht und durch die Seilumlenkung hindurchgeführt. Zudem wird der Kolben an dem Zugseil befestigt. Hierbei kommt es aber nicht auf die Reihenfolge der Schritte an, soweit nicht technisch zwingend erforderlich.

Die Erfindung sowie das technische Umfeld werden im Folgenden anhand der Figuren beispielhaft erläutert. Es zeigen schematisch
- Figur 1:: eine Schnittdarstellung durch eine Straffvorrichtung,
- Figur 2:: eine Explosionsdarstellung der Straffvorrichtung,
- Figur 3:: eine Perspektivdarstellung eines Führungsteils der Straffvorrichtung,
- Figur 4:: eine Schnittdarstellung durch das Führungsteil,
- Figur 5:: eine Perspektivdarstellung eines Fixierungsteils der Straffvorrichtung und
- Figur 6:: eine Schnittdarstellung durch das Fixierungsteil.

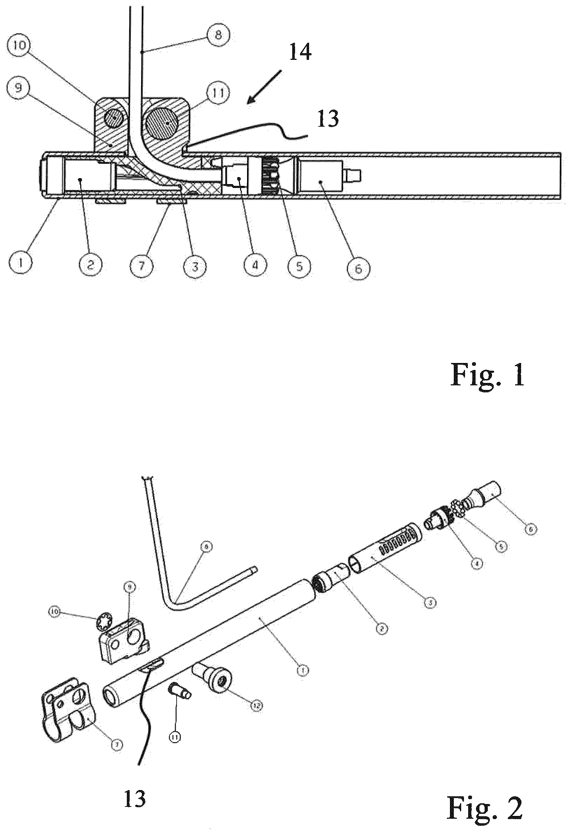

Die in den Figuren 1 und 2 dargestellte Straffvorrichtung umfasst ein Strafferrohr 1 und ein Zugseil 8, an dessen in dem Strafferrohr 1 angeordneten Ende ein Kolben 4 angebracht ist, welcher mittels einer Befestigung 6 an dem Zugseil 8 befestigt ist, wobei Kugeln 5 eine reibungsarme Führung des Kolbens 4 in dem Strafferrohr 1 ermöglichen. In dem Mantel des Strafferrohrs 1 ist eine Ausnehmung 13 ausgebildet.

Die Straffvorrichtung umfasst zudem eine Seilumlenkung 14, mittels welcher das Zugseil 8 durch die Ausnehmung 13 im Strafferrohr 1 geführt ist. Die Seilumlenkung 14 umfasst ein Führungsteil 3, in dessen dem Kolben 4 abgewandter Aufnahme 15 ein Gasgenerator 2 angeordnet ist. Die Seilumlenkung 14 umfasst zudem ein Fixierungsteil 9, welches mit einem Vorsprung 19 durch die Ausnehmung 13 in dem Strafferrohr 1 hindurchgreift. Das Fixierungsteil 9 ist mittels eines Halters 7 über ein Niet 11 und eine Schraube 12 an dem Strafferrohr 1 befestigt, wobei der Halter 7 das Strafferrohr 1 außen umgreift.

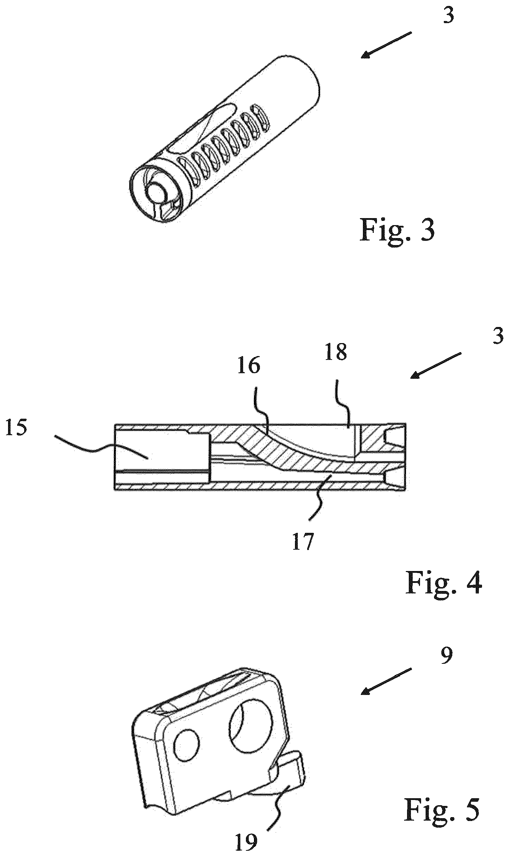

Wie insbesondere aus der Zusammenschau der Figuren 3 und 4 zu erkennen ist, weist das Führungsteil 3 eine Aufnahme 15 für den Gasgenerator 2 auf. Zudem bildet das Führungsteil 3 mehrere Druckgasleitkanäle 17 aus, die sich von der Aufnahmeseite zu dem Ende des Führungsteils 3 erstrecken, das dem Kolben 4 zugewandt ist.

Das Führungsteil 3 bildet zudem eine Umlenkung 16 auf, mittels der das Zugseil 8 der Ausnehmung 13 im Strafferrohr 1 zugeführt wird.

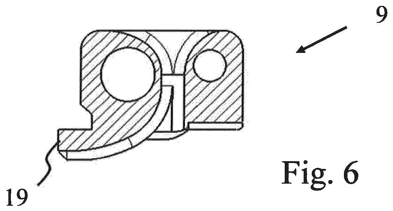

Zudem ist aus der Zusammenschau der Figuren 3 bis 6 zu erkennen, dass das Fixierungsteil 9 einen Vorsprung 19 aufweist, der im montierten Zustand in eine in dem Führungsteil 3 ausgebildete Aussparung 18 eingreift.

Im Auslösefall erzeugt der Gasgenerator 2 Druckgas, welches durch die Druckgasleitkanäle 17 entlang der Umlenkung 16 vorbei geleitet wird, sodass das heiße Druckgas im Bereich des Führungsteils 3 das Zugseil 8 nicht unmittelbar beaufschlagt. Das Führungsteil 3 ist dabei so ausgebildet, dass Druckgas nur entlang der Druckgasleitkanäle 17 aus dem Führungsteil 3 austreten kann. Das aus dem Führungsteil 3 austretende Druckgas beschleunigt den Kolben 4 in den Figuren nach rechts, sodass das Zugseil 8 in das Strafferrohr 1 hineingezogen wird, wobei mit der Seilumlenkung 14 vermieden wird, dass das Zugseil 8 unmittelbar in Kontakt mit dem Strafferrohr 1 gelangt.

Für eine vereinfachte Montage kann der Gasgenerator 2 zunächst in die Aufnahme 15 des Führungsteils 3 eingebracht werden und sodann gemeinsam mit dem Führungsteil 3 in das Strafferrohr 1 eingeschoben werden. Anschließend erfolgt eine Fixierung des Führungsteils 3 mittels des Fixierungsteils 9, indem das Fixierungsteil 9 mit seinem Vorsprung 19 in die Aussparung 18 des Führungsteils 3 eingebracht wird. Anschließend wird das Fixierungsteil 9 mittels des Halters 7 an dem Strafferrohr 1 festgelegt. Zudem wird das Zugseil 8 durch die Seilumlenkung 14 in das Strafferrohr 1 eingebracht, wobei vorher oder anschließend eine Fixierung des Kolbens 4 mit der Befestigung 6 erfolgen kann.

### Bezugszeichenliste

- 1: Strafferrohr
- 2: Gasgenerator
- 3: Führungsteil
- 4: Kolben
- 5: Kugel
- 6: Befestigung
- 7: Halter
- 8: Zugseil
- 9: Fixierungsteil
- 10: Unterlegscheiben
- 11: Niet
- 12: Schraube
- 13: Ausnehmung
- 14: Seilumlenkung
- 15: Aufnahme
- 16: Umlenkung
- 17: Druckgasleitkanal
- 18: Aussparung
- 19: Vorsprung

## Patentansprüche

1. Straffvorrichtung für eine Sicherheitsgurtkomponente, mit
- einem Gasgenerator (2) zur Erzeugung eines Druckgases,
- einem von dem Druckgas antreibbaren Kolben (4),
- einem an den Kolben (4) angeschlossenen Zugseil (8), welches mit einer in eine Straffbewegung zu versetzenden Sicherheitsgurtkomponente verbindbar ist, und
- einem Strafferrohr (1) zur Aufnahme und Führung des Kolbens (4),
wobei
- der Gasgenerator (2) im Strafferrohr (1) angeordnet ist,
- das Strafferrohr (1) zwischen dem Gasgenerator (2) und dem Kolben (4) eine Ausnehmung (13) in seinem Mantel aufweist und
- eine Seilumlenkung (14) vorgesehen ist, mit der das Zugseil (8) durch die Ausnehmung (13) aus dem Strafferrohr (1) herausgeführt ist, wobei die Seilumlenkung (14) ein entlang der Erstreckung des Strafferrohrs (1) in das Strafferrohr (1) eingeschobenes Führungsteil (3) umfasst, **dadurch gekennzeichnet, dass** das Führungsteil (3) eine Aufnahme (15) aufweist und wobei der Gasgenerator (2) in der Aufnahme (15) angeordnet ist.

2. Straffvorrichtung nach Anspruch 1, wobei das Führungsteil (3) eine Umlenkung (16) für das Zugseil (8) aufweist, wobei sich die Umlenkung (16) von dem kolbenseitigen Ende des Führungsteils (3) zu der Ausnehmung (13) im Strafferrohr (1) erstreckt.

3. Straffvorrichtung nach Anspruch 1 oder 2, wobei das Führungsteil (3) mindestens einen Druckgasleitkanal (17) ausbildet, wobei sich der Druckgasleitkanal (17) entlang der Erstreckung des Strafferrohrs (1) zu dem kolbenseitigen Ende des Führungsteils (3) erstreckt.

4. Straffvorrichtung nach einem der vorhergehenden Ansprüche, wobei die Seilumlenkung (14) ein von außerhalb des Strafferrohrs (1) in die Ausnehmung (13) des Strafferrohrs (1) greifendes Fixierungsteil (9) umfasst, wobei das Zugseil (8) durch das Fixierungsteil (9) geführt ist.

5. Straffvorrichtung nach Anspruch 4, wobei das Fixierungsteil (9) mit einem Halter (7) an dem Strafferrohr (1) gehalten ist.

6. Straffvorrichtung nach einem der vorhergehenden Ansprüche, wobei die Seilumlenkung (14) zwei- oder mehrteilig ausgebildet ist und ein in das Strafferrohr (1) eingeschobenes Führungsteil (3) und ein von außen durch die Ausnehmung (13) greifendes Fixierungsteil (9) aufweist.

7. Straffvorrichtung nach Anspruch 6, wobei das Führungsteil (3) eine Aussparung (18) aufweist, in die das Fixierungsteil (9) mit einem Vorsprung (19) eingreift.

8. Straffvorrichtung nach einem der Ansprüche 5 oder 6, wobei das Führungsteil (3) und das Fixierungsteil (9) eine Umlenkung für das Zugseil (8) ausbilden.

9. Straffvorrichtung nach einem der vorhergehenden Ansprüche, wobei die Ausnehmung (14) in einem geradlinig ausgebildeten Abschnitt des Strafferrohrs (1) angeordnet ist.

10. Straffvorrichtung nach einem der vorhergehenden Ansprüche, wobei das Strafferrohr (1) über seine gesamte Erstreckung geradlinig ausgebildet ist.

11. Verfahren zur Herstellung einer Straffvorrichtung, umfassend die folgenden Schritte:
a) Bereitstellen eines eine Ausnehmung (13) in seinem Mantel aufweisenden Strafferrohrs (1),
b) Vormontieren eines Gasgenerators (2) in einer Aufnahme (15) eines Führungsteils (3) einer Seilumlenkung (14),
c) Einschieben des Führungsteils (3)der Seilumlenkung (14) mit dem vormontierten Gasgenerator (2) in das Strafferrohr (1),
d) Fixierung der Seilumlenkung (14) am Strafferrohr (1),
e) Einbringen eines Zugseils (8) in das Strafferrohr (1),
f) Befestigen eines Kolbens an dem Zugseil (8).

## Claims

1. Tensioning device for a safety belt component, comprising
- a gas generator (2) for generating a pressurized gas,
- a piston (4) which can be driven by the pressurized gas,
- a traction cable (8) which is connected to the piston (4) and can be connected to a safety belt component to be set into tensioning motion, and
- a tensioner tube (1) for receiving and guiding the piston (4),
wherein
- the gas generator (2) is arranged in the tensioner tube (1),
- the tensioner tube (1) has a cut-out (13) in the casing thereof between the gas generator (2) and the piston (4), and
- a cable deflector (14) is provided, by means of which the traction cable (8) is guided out of the tensioning tube (1) through the cut-out (13), wherein the cable deflector (14) comprises a guide part (3) inserted into the tensioning tube (1) along the extension of the tensioning tube (1), **characterized in that** the guide part (3) has a receptacle (15) and wherein the gas generator (2) is arranged in the receptacle (15).

2. Tensioning device according to claim 1, wherein the guide part (3) has a deflection (16) for the traction cable (8), wherein the deflection (16) extends from the piston-side end of the guide part (3) to the cut-out (13) in the tensioner tube (1).

3. Tensioning device according to claim 1 or 2, wherein the guide part (3) forms at least one pressurized gas duct (17), wherein the pressurized gas duct (17) extends along the extension of the tensioner tube (1) to the piston-side end of the guide part (3).

4. Tensioning device according to any of the preceding claims, wherein the cable deflector (14) comprises a fixing part (9) which engages in the cut-out (13) of the tensioner tube (1) from outside the tensioner tube (1), wherein the traction cable (8) is guided through the fixing part (9).

5. Tensioning device according to claim 4, wherein the fixing part (9) is held on the tensioner tube (1) by a holder (7).

6. Tensioning device according to any of the preceding claims, wherein the cable deflector (14) is formed in two or more parts and has a guide part (3) which is inserted into the tensioner tube (1), and a fixing part (9) which engages through the cut-out (13) from the outside.

7. Tensioning device according to claim 6, wherein the guide part (3) has a recess (18) in which the fixing part (9) engages by means of a projection (19).

8. Tensioning device according to either claim 5 or claim 6, wherein the guide part (3) and the fixing part (9) form a deflection for the traction cable (8).

9. Tensioning device according to any of the preceding claims, wherein the cut-out (14) is arranged in a rectilinear portion of the tensioner tube (1).

10. Tensioning device according to any of the preceding claims, wherein the tensioner tube (1) is rectilinear over its entire extension.

11. Method for producing a tensioning device, comprising the following steps:
a) providing a tensioner tube (1) which has a cut-out (13) in its casing,
b) pre-assembling a gas generator (2) in a receptacle (15) of a guide part (3) of a cable deflector (14),
c) inserting the guide part (3) of the cable deflector (14) with the preassembled gas generator (2) into the tensioner tube (1),
d) fixing the cable deflector (14) to the tensioner tube (1),
e) introducing a traction cable (8) into the tensioner tube (1),
f) fastening a piston to the traction cable (8).

## Revendications

1. Dispositif de tension pour un composant de ceinture de sécurité, comportant
- un générateur de gaz (2) destiné à produire un gaz comprimé,
- un piston (4) pouvant être entraîné par le gaz comprimé,
- un câble de traction (8) raccordé au piston (4) et pouvant être relié à un composant de ceinture de sécurité à mettre en mouvement de tension, et
- un tube tendeur (1) destiné à recevoir et à guider le piston (4), et
dans lequel
- le générateur de gaz (2) est disposé dans le tube tendeur (1),
- le tube tendeur (1) présente un évidement (13) dans son enveloppe entre le générateur de gaz (2) et le piston (4) et
- un moyen de renvoi de câble (14) est prévu, avec lequel le câble de traction (8) est guidé hors du tube tendeur (1) et à travers l'évidement (13), dans lequel le moyen de renvoi de câble (14) comprend une pièce de guidage (3) insérée dans le tube tendeur (1) le long de l'extension du tube tendeur (1),
**caractérisé en ce que** la pièce de guidage (3) présente un logement (15) et dans lequel le générateur de gaz (2) est disposé dans le logement (15).

2. Dispositif de tension selon la revendication 1, dans lequel la pièce de guidage (3) présente un moyen de renvoi (16) pour le câble de traction (8), dans lequel le moyen de renvoi (16) s'étend depuis l'extrémité côté piston de la pièce de guidage (3) jusqu'à l'évidement (13) dans le tube tendeur (1).

3. Dispositif de tension selon la revendication 1 ou 2, dans lequel la partie de guidage (3) forme au moins un canal de guidage de gaz comprimé (17), dans lequel le canal de guidage de gaz comprimé (17) s'étend le long de l'extension du tube tendeur (1) vers l'extrémité côté piston de la partie de guidage (3).

4. Dispositif de tension selon l'une des revendications précédentes, dans lequel le moyen de renvoi de câble (14) comprend une pièce de fixation (9) venant en prise dans l'évidement (13) du tube tendeur (1) depuis l'extérieur du tube tendeur (1), dans lequel le câble de traction (8) est guidé par la pièce de fixation (9).

5. Dispositif de tension selon la revendication 4, dans lequel la pièce de fixation (9) est maintenue sur le tube tendeur (1) par un moyen de maintien (7).

6. Dispositif de tension selon l'une des revendications précédentes, dans lequel le moyen de renvoi de câble (14) est réalisé en deux parties ou en plusieurs parties et présente une partie de guidage (3) insérée dans le tube tendeur (1) et une partie de fixation (9) venant en prise depuis l'extérieur à travers l'évidement (13).

7. Dispositif de tension selon la revendication 6, dans lequel la pièce de guidage (3) présente un renfoncement (18) dans lequel la pièce de fixation (9) vient en prise avec une saillie (19).

8. Dispositif de tension selon l'une des revendications 5 ou 6, dans lequel la pièce de guidage (3) et la pièce de fixation (9) forment un moyen de renvoi pour le câble de traction (8).

9. Dispositif de tension selon l'une des revendications précédentes, dans lequel l'évidement (14) est disposé dans une section de forme rectiligne du tube tendeur (1).

10. Dispositif de tension selon l'une des revendications précédentes, dans lequel le tube tendeur (1) est réalisé de manière à être rectiligne sur toute son extension.

11. Procédé pour la fabrication d'un dispositif de tension, comprenant les étapes suivantes :
a) mise à disposition d'un tube tendeur (1) présentant un évidement (13) dans son enveloppe,
b) prémontage d'un générateur de gaz (2) dans un logement (15) d'une partie de guidage (3) d'un moyen de renvoi de câble (14),
c) insertion de la pièce de guidage (3) du moyen de renvoi de câble (14) avec le générateur de gaz (2) prémonté dans le tube tendeur (1),
d) fixation du moyen de renvoi de câble (14) sur le tube tendeur (1),
e) mise en place d'un câble de traction (8) dans le tube tendeur (1),
f) fixation d'un piston au câble de traction (8).
